**Europäisches Patentamt**

**European Patent Office**

**Office européen des brevets**

(19)

(11) Veröffentlichungsnummer: **0 545 181 B1**

(12)

# EUROPÄISCHE PATENTSCHRIFT

(45) Veröffentlichungstag der Patentschrift: **06.09.95**

(21) Anmeldenummer: **92119853.7**

(22) Anmeldetag: **21.11.92**

(51) Int. Cl.⁶: **C08L 23/02**, C08L 25/02,
//(C08L25/02,23:02,53:02)

(54) **Thermoplastische Formmasse.**

(30) Priorität: **03.12.91 DE 4139827**

(43) Veröffentlichungstag der Anmeldung:
**09.06.93 Patentblatt 93/23**

(45) Bekanntmachung des Hinweises auf die
Patenterteilung:
**06.09.95 Patentblatt 95/36**

(84) Benannte Vertragsstaaten:
**BE DE ES FR GB IT NL**

(56) Entgegenhaltungen:
**EP-A- 0 270 515**
**EP-A- 0 328 956**
**EP-A- 0 437 745**
**FR-A- 2 112 267**

(73) Patentinhaber: **BASF Aktiengesellschaft**
**Carl-Bosch-Strasse 38**
**D-67063 Ludwigshafen (DE)**

(72) Erfinder: **Seelert, Stefan, Dr.**
**Albrecht-Duerer-Ring 23a**
**W-6710 Frankenthal (DE)**
Erfinder: **Hoenl, Hans, Dr.**
**Hauptstrasse 69a**
**W-6719 Obersuelzen (DE)**
Erfinder: **Ostermayer, Bertram, Dr.**
**Zeppelinstrasse 179**
**W-6900 Heidelberg (DE)**
Erfinder: **Jung, Andreas, Dr.**
**R 4, 3**
**W-6800 Mannheim 1 (DE)**
Erfinder: **Klaerner, Peter, Dr.**
**Hauptstrasse 62**
**W-6719 Battenberg (DE)**

## Beschreibung

Polystyrole und Polyolefine sind Polymere, die molekular nicht miteinander mischbar sind. Wenn solche Mischungen mit günstigen Produkteigenschaften hergestellt werden sollen, müssen deshalb weitere Polymere zugegeben werden. Durch Zugabe sog. Verträglichkeitsvermittler ergeben sich Polymermischungen, die die gute Spannungsrißbeständigkeit und die gute Wasserdampfundurchlässigkeit der Polyolefine mit der guten Verarbeitbarkeit der Polystyrole in sich vereinen.

Als Verträglichkeitsvermittler werden z.B. in DE-PS 2 003 916 Blockcopolymerisate des Typs X-Y und X-Y-X genannt, wobei X ein Vinylaromat und Y ein Dienkohlenwasserstoff ist, und das Copolymerisat ganz oder teilweise hydriert sein kann. Styrol-Butadien-Styrol-Dreiblockcopolymere werden auch in EP 42 153 als Verträglichkeitsvermittler beschrieben.

In EP 60 524 werden Mischungen aus Polypropylen und schlagfestem Polystyrol mit einem linearem $S-(D-S)_n$ Blockcopolymerisat beschrieben, wobei S Styrol, D Butadien oder Isopren und n eine ganze Zahl bedeutet. Blends aus HDPE und schlagfestem Polystyrol mit $S-(D-S)_n$ Blockcopolymerisat werden in EP 60 525 genannt, wobei wiederum S Styrol und n eine ganze Zahl bedeutet, D aber Isopren oder hydriertes Butadien darstellt. Nach der Lehre dieser Druckschriften soll der Styrolgehalt der Blockcopolymeren auf jeweils unter 50 Gew.-% beschränkt sein.

Die vorstehend erwähnten Blockcopolymerisate sind linear. Daneben werden in EP 125 227, 310 051, 329 283, 421 359 und US 4 495 323 auch sternförmige, aus Butadien und Styrol aufgebaute Blockcopolymerisate als Verträglichkeitsvermittler in Blends aus schlagfesten Polystyrol und Polyolefinen angegeben.

Ein weiterer Weg, um Blends aus Polystyrol und Polyolefinen mit verbesserten Produkteigenschaften herzustellen, besteht darin, als Verträglichkeitsvermittler Mischungen aus Blockcopolymeren einzusetzen. Entsprechende Angaben vermittelt EP 402 340.

Die durch Mischen von Polystyrolen und Polyolefinen hergestellten thermoplastischen Formmassen sollten sich möglichst universell einsetzen lassen, d.h. es sollte nicht nur möglich sein, z.B. für Lebensmittelverpackungen Formkörper mit guten Eigenschaften durch Tiefziehen herstellen zu können, sondern auch durch Spritzguß gefertigte Formkörper sollten eine ausreichende Zähigkeit aufweisen. Den mit den oben erwähnten Blockcopolymerisaten als Verträglichkeitsvermittler hergestellten Mischungen aus Polystyrol und Polyolefinen ist aber zu eigen, daß sie immer noch, insbesondere bei Spritzgußanwendungen, Nachteile in Bezug auf die Zähigkeit haben. Es bestand daher die Aufgabe, Formmassen mit guter Spannungsrißbeständigkeit, guter Wasserdampfundurchlässigkeit und guter Verarbeitbarkeit sowie verbesserter Zähigkeit insbesondere bei der Spritzgußanwendung zu entwickeln.

Diese Aufgabe wurde gelöst durch Formmassen aus Styrol und/oder substituiertes Styrol enthaltenden Polymerisaten, Polyolefinen und als Verträglichkeitsvermittler dienenden unsymmetrischen Blockcopolymerisaten mit einem Styrol-Gehalt zwischen 50 und 85 Gew.-%.

Unmittelbarer Erfindungsgegenstand ist eine thermoplastische Formmasse, die enthält, jeweils bezogen auf die Summe aus A, B und C,

A: mindestens 10 bis etwa 90 Gew.-% eines Styrol und/oder substituiertes Styrol enthaltenden Polymerisats A,

B: mindestens 10 bis etwa 90 Gew.-% eines Polyolefins B und

C: 1 bis 20 Gew.-% eines durch anionische Polymerisation aus Styrol und Butadien und/oder Isopren hergestellten, unsymmetrischen linearen Dreiblockcopolymerisats C der Struktur $S_1-D-S_2$, wobei $S_1$ und $S_2$ je einen Polystyrolblock und D einen Polydienblock bezeichnet,

wobei erfindungsgemäß das Dreiblockcopolymerisat einen Styrolgehalt, bezogen auf C, zwischen 50 und 85 Gew.-% aufweist und sich die aus Styrol aufgebauten Endblöcke $S_1$ und $S_2$ im Molekulargewicht um mindestens 50 % unterscheiden.

Als Styrolpolymerisat A kommen sowohl Homo- als auch Copolymerisate von Styrol und/oder substituierten Styrolen in Betracht. Substituierte Styrole sind vorzugsweise methylsubstituierte Styrole, in denen ein Methylrest als Substituent am aromatischen Ring oder an der Seitenkette vorhanden ist. Hier sind vor allem p-Methylstyrol und $\alpha$-Methylstyrol zu nennen. Die Homo- und Copolymerisate können in bekannter Weise in Masse, Lösung oder Suspension hergestellt werden.

Als Styrolpolymerisat A kommen auch schlagzäh modifizierte Styrolpolymerisate in Frage. Diese Pfropfcopolymerisate werden durch Polymerisation von Styrol und/oder substituierten Styrolen in Gegenwart eines Kautschuks hergestellt. Als Kautschuk werden zur Schlagzähmodifizierung von Styrolpolymerisaten geeignete natürliche oder synthetische Kautschuke eingesetzt. Als Kautschuke im Sinne der Erfindung kommen außer Naturkautschuk z.B. Polybutadien, Polyisopren und Mischpolymerisate des Butadiens und/oder Isoprens mit Styrol und anderen Comonomeren, die eine Glastemperatur unter -20°C (nach K.H. Illers und H. Breuer, Kolloidzeitschrift 176 (1961), S. 110) besitzen. Besonders eignen sich Butadienpolyme-

EP 0 545 181 B1

risate mit einem 1,4-cis-Gehalt, der zwischen 25 und 99 Gew.-% liegt. Es können aber auch Acrylkautschuke, EPDM-, Polybutylen- und Polyoctenamerkautschuke eingesetzt werden. Der mit Styrol gepfropfte Kautschuk (Weichphase) liegt dabei fein verteilt in der gewöhnlich als Hartmatrix bezeichneten Polystyrolphase vor. Der Kautschukgehalt kann zwischen 3 und 25 Gew.-%, vorzugsweise zwischen 5 und 15 Gew.-%, bezogen auf A, betragen.

Die Verfahren zur Herstellung von Styrolpolymerisaten sind bekannt und werden z.B. in "Ullmanns Encyklopädie der technischen Chemie", 4. Auflage, Band 19, Seiten 265 bis 295, Verlag Chemie, Weinheim oder H. Gerrens, Chem. Ing. Tech. 52 (1980), 477 beschrieben.

Polystyrole, substituierte Polystyrole und schlagzäh modifizierte Polystyrole sind im Handel erhältlich. Die Viskositätszahl der Styrolpolymerisate A, bzw. im Fall der schlagzäh modifizierten Polystyrole, der Hartmatrix, soll zwischen 50 und 130 ml/g (gemessen in 0,5 %iger Lösung in Toluol bei 23°C) liegen. Der Anteil des Polymeren A in der erfindungsgemäßen Formmasse beträgt mindestens 10, bevorzugt 30 bis 80 Gew.-%. Wenn es auf besondere Zähigkeit der Formmasse ankommt, ist der Anteil bevorzugt 50 bis 80 Gew.-%.

Als Polyolefin B kommen Homo- oder Copolymerisate des Propylens und des Ethylens in Frage. Geeignet ist z.B. Polypropylen, das etwa nach dem sog. Gasphasenverfahren hergestellt werden kann und einen Schmelzflußindex (MFI 190/5) von 0,1 bis 90 g/10 min aufweist. Bevorzugt ist Polyethylen, hergestellt nach dem Hoch-, Mittel- oder Niederdruckverfahren mit einer Dichte zwischen 0,91 und 0,97 $g/cm^3$; ebenso geeignet sind Copolymerisate von Ethylen z.B. mit Vinylestern wie Vinylacetat oder Vinylpropionat, mit Acrylestern oder mit Propylen. Der Comonomerengehalt der Ethylencopolymerisate liegt zwischen z.B. 1 und 65 Gew.-%, vorzugsweise zwischen 10 und 45 Gew.-%. Der Schmelzflußindex der Ethylenpolymerisate kann in einem weiten Bereich gewählt werden und beträgt vorzugsweise 0,5 bis 40 g/10 min (MFI 190/216). Ein bevorzugtes Polyolefin ist Polyethylen hoher Dichte (Bereich 0,94 bis 0,97 $g/cm^3$) hergestellt nach dem Phillips-Verfahren (Mitteldruckverfahren). Ein anderes bevorzugtes Polyolefin ist lineares Polyethylen niedriger Dichte (Bereich 0,91 bis 0,9 $g/cm^3$) hergestellt nach dem Gasphasenverfahren. Genannt werden soll auch füllstoffhaltiges Polyethylen; bevorzugt wird in diesem Fall Calciumcarbonat als Füllstoff, das in Form von Kreide vorliegt und besonders bevorzugt einen mittleren Teilchendurchmesser von 0,1 bis 20 $\mu$m aufweist.

Der Gehalt der erfindungsgemäßen Formmasse an Polyolefin B soll mindestens 10, bevorzugt 30 bis 80 Gew.-% betragen. Zähe Formmassen haben einen Gehalt an B von bevorzugt 20 bis 50 Gew.-%. Polyolefinreiche FOrmmassen, d.h. solche, die einen Gehalt von 50 Gew.-% oder mehr (z.B. bis annähernd 90 Gew.-%) aufweisen, haben dagegen eine besonders günstige Spannungsrißbeständigkeit und Undurchlässigkeit gegenüber Wasserdampf.

Blockcopolymer C ist ein durch anionische Polymerisation aus Styrol und Butadien oder Isopren erzeugtes, unsymmetrisches lineares Blockcopolymerisat der Struktur $S_1$-D-$S_2$, das einen Styrolgehalt zwischen 50 und 85 Gew.-%, bezogen auf C, aufweist. D bedeutet dabei einen oder mehrere Butadien der Isopren enthaltende Blöcke. Die Endblöcke $S_1$ und $S_2$ sind aus Styrol aufgebaut und unterscheiden sich im Molekulargewicht um mindestens 50 %, d.h. das Verhältnis von $S_2$ zu $S_1$ beträgt mindestens 1,5. Bevorzugt werden Blockcopolymerisate eingesetzt, in denen das Molekulargewicht von $S_2$ mindestens doppelt so groß ist wie das von $S_1$.

Das Molekulargewicht der Blockcopolymeren C beträgt zwischen 30 000 und 300 000, vorzugsweise zwischen 50 000 und 200 000, insbesondere zwischen 80 000 und 120 000.

Die Herstellung von Blockcopolymerisaten durch anionische Polymerisation ist allgemein bekannt. Sie erfolgt in der Regel in organischen Lösungsmitteln mit lithiumorganischen Verbindungen im Temperaturbereich zwischen -20 und 100°C bei Drucken, die ausreichend sind, um die Existenz einer flüssigen Phase zu gewährleisten. Die Übergänge zwischen den einzelnen Blöcken können scharf oder verschmiert sein.

Scharfe Übergänge werden erhalten, wenn die anionische Polymerisation der Monomeren stufenweise erfolgt. Blockcopolymere mit verschmierten Übergängen zwischen den Blöcken können z.B. nach DE 14 20 689 oder DE 15 95 296 hergestellt werden. Dabei wird in der Regel zunächst der Styrolblock $S_1$ anionisch polymerisiert. Die daran anschließende Herstellung des Blockes D kann auf mehrere Arten erfolgen. Es kann, nachdem $S_1$ auspolymerisiert ist, die zur Erzeugung der Blöcke D und $S_2$ benötigte Menge an Butadien oder Isopren und Styrol gemeinsam zugegeben werden. Dann polymerisiert zunächst das reaktivere Butadien bzw. Isopren und daran anschließend das Styrol, wobei sich der Block $S_2$ bildet. Zwischen dem Butadien- bzw. Isoprenblock und dem Block $S_2$ bildet sich bei dieser Vorgehensweise ein verschmierter Übergangsbereich aus, in dem Butadien bzw. Isopren und Styrol statistisch in die Kette eingebaut sind. Der Übergangsbereich ist dabei dem Block D zuzuordnen.

Es ist auch möglich, bei der Herstellung der Blockcopolymeren C stufenweise vorzugehen. Nachdem $S_1$ auspolymerisiert ist, kann zunächst Butadien und/oder Isopren zugegeben werden und, nachdem dieses

3

auspolymerisiert sind, wird die restliche Menge Styrol zur Polymerisation des Blocks $S_2$ zugefügt. Es ist auch möglich, im Anschluß an die Polymerisation von $S_1$ eine Mischung aus Butadien und/oder Isopren und Styrol zuzugeben, um in Anwesenheit geeigneter Verbindungen wie z.B. Ethern oder tertiären Aminen einen statistischen Styrol-Butadien/Isopren-Block herzustellen. Anschließend muß ebenfalls Block $S_2$ polymerisiert werden. Weiterhin ist es möglich, auch den Block D stufenweise herzustellen. Ein solches Verfahren ist in EP 270 515 beschrieben. Dabei wird zunächst $S_1$ polymerisiert. Als zweites wird ein aus Butadien und/oder Isopren und Styrol bestehender Block, danach ein statistisch aus Butadien und/oder Isopren und Styrol aufgebauter Block und zuletzt der Block $S_2$ polymerisiert. Der aus Butadien und/oder Isopren bestehende Block und der statistisch aus Butadien und/oder Isopren und Styrol aufgebaute Block bilden dann gemeinsam den Block D der Komponente C.

Die Blockcopolymerisate können gegebenenfalls selektiv hydriert oder teilhydriert sein, wobei lediglich die von den Monomerenbausteinen Butadien und/oder Isopren herrührenden Doppelbindungen abgesättigt werden. Derartige Verfahren sind ebenfalls bekannt und können z.B. nach den Angaben der DE-OS 27 48 884 ausgeführt werden.

Bei der Polymerisation der Blockcopolymeren C ist es auch möglich, anstelle von Styrol ein Gemisch aus Styrol und substituierten Styrolen einzusetzen. Als substituierte Styrole kommen vorzugsweise methylsubstituierte Styrole und insbesondere p-Methylstyrol oder $\alpha$-Methylstyrol in Frage.

Die erfindungsgemäße Formmasse kann zur weiteren Verbesserung der Eigenschaften 0.05-50 Gewichtsteile - bezogen auf 100 Teile A + B + C-Hilfs- oder Zusatzstoffen enthalten die für die Komponenten A, B und C üblich und gebräuchlich sind. Bei diesen Zusatzstoffen handelt es sich z.B. um Hitze- oder Lichtstabilisatoren, Gleit-oder Entformungsmittel, Schmiermittel, Antistatika, Färbemittel wie Farbstoffe oder Pigmente, Flammschutzmittel oder Verstärkungsmaterialien außer Kreide. Die Zusatzstoffe können bei der Vermischung von A, B und C zugegeben werden, sie können aber auch schon in A, B oder C enthalten gewesen sein.

Die Herstellung der Formmassen erfolgt durch Mischen der Komponenten nach allen bekannten Verfahren. Vorzugsweise geschieht das Vermischen der Komponenten bei höherer Temperatur, z.B. in der Schmelze, durch gemeinsames Verwalzen, Kneten oder Extrudieren in einem Ein- oder Zweischneckenextruder.

Die zur Charakterisierung der Mischungen verwendeten Parameter wurden wie folgt bestimmt:
- Die Streckspannung und Reißdehnung nach DIN 53 455.
- Der Zug-Elastizitätsmodul nach DIN 53 457.
- Die multiaxiale Zähigkeit als Durchstoßarbeit (Gesamtarbeit $W_{ges}$) nach DIN 53 443.
- Die Viskositätszahl (VZ) nach DIN 51 562 Teil 1 bei den jeweils genannten Bedingungen.
- Das Gewichtsmittel $M_w$ durch Gelpermeationschromatographie mit einer Kombination von Ultrastyragel-Säulen und THF als Elutionsmittel gegen eine Eichung mit Polystyrol-Standards.

Weitere Angaben sind bei den jeweiligen Mischungspartnern gemacht.


Beispiele


Für die Herstellung der erfindungsgemäßen Formmassen und der Vergleichsmassen wurden folgende Bestandteile verwendet:


Komponente A:


A      Schlagfestes Polystyrol mit einem Polybutadiengehalt von 8 %, einem mittleren Teilchendurchmesser ($d_{50}$ der integralen Masseverteilung) von 2,7 $\mu$m, enthaltend 0,12 Gew.-% eines sterisch gehinderten Phenols als Antioxydans. Die VZ der Hartmatrix beträgt 70 ml/g (0,5 %ig in Toluol bei 23°C).


Komponente B:


B1      LLDPE Lupolen L 3020 GN der BASF AG (Dichte 0,930 g/cm³ nach DIN 53 479; MFI (190/2,16) zwischen 0,9 und 1,2 g/10 min nach DIN 53 735).
B2      HDPE Lupolen 5661 B der BASF AG (Dichte 0,956 g/cm³ nach DIN 53 479; MFI (190/21,6) zwischen 8 und 11 g/10 min nach DIN 53 735).

Komponente C:

C1  Aus Styrol und Butadien aufgebautes Dreiblockcopolymerisat der Struktur $S_1$-D-$S_2$ mit insgesamt 74 Gew.-% Styrol und $M_w$ 100 000, wobei $M_w$ von $S_1$ 16 000 beträgt, zwischen Butadien-Block und $S_2$ ein verschmierter Übergang vorliegt und das Verhältnis von $S_2$ zu $S_1$ 3,3 ist.

C2  Aus Styrol und Butadien aufgebautes Dreiblockcopolymerisat der Struktur $S_1$-D-$S_2$ mit insgesamt 65 Gew.-% Styrol und $M_w$ 80 000, wobei $M_w$ von $S_1$ 13 000 beträgt, zwischen Butadien-Block und $S_2$ ein verschmierter Übergang vorliegt und das Verhältnis von $S_2$ zu $S_1$ 2,2 ist.

C3  Aus Styrol und Butadien aufgebautes Dreiblockcopolymerisat der Struktur $S_1$-D-$S_2$ mit insgesamt 58 Gew.-% Styrol und $M_w$ 100 000, wobei $M_w$ von $S_1$ 16 000 beträgt, zwischen Butadien-Block und $S_2$ ein verschmierter übergang vorliegt und das Verhältnis von $S_2$ zu $S_1$ ca. 2,0 ist.

C4  Finaclear® 520, handelsübliches Dreiblockcopolymerisat der Firma Fina mit der Struktur $S_1$-D-$S_2$ mit insgesamt 72 Gew.-% Styrol und $M_w$ 90 000, wobei $M_w$ von $S_1$ 14 000 und $M_w$ von $S_2$ 38 000 beträgt.

C5  Symmetrisches Dreiblockcopolymerisat des Aufbaus $S_1$-D-$S_1$ mit insgesamt 70 Gew.-% Styrol und $M_w$ 100 000, wobei $M_w$ der Blöcke $S_1$ jeweils 25 000 beträgt und D in Form eines statistisch aus Styrol und Butadien aufgebauten Blocks vorliegt, zum Vergleich.

C6  Mischung eines polymodal aufgebauten Sternblockcopolymerisats mit ca. 75 Gew.-% Styrol und 25 Gew.-% Butadien gemäß der Lehre der DE-OS 25 50 227 mit $M_w$ 200 000 und eines polymodal aufgebauten Sternblockcopolymerisats mit ca. 40 Gew.-% Styrol und 60 Gew.-% Butadien mit $M_w$ 150 000 im Verhältnis 1:1, ebenfalls zum Vergleich.

C7  Cariflex® TR 1101, handelsübliches Dreiblockcopolymerisat der Firma Shell mit insgesamt 30 Gew.-% Styrol und $M_w$ 92 000, ebenfalls zum Vergleich.

Hilfs- bzw. Zusatzstoffe

Die Bestandteile wurden jeweils mit der Komponente A als Vormischung eingebracht, wobei als Antioxydans ein handelsübliches sterisch gehindertes Phenol (Irganox® 1076 der Firma Ciba-Geigy) verwendet wurde.

Die fertige Formmasse wurde auf einem Zweischneckenextruder ZSK 30 der Fa. Werner & Pfleiderer bei 210°C mit einem Durchsatz von 10 kg/h gemischt. Ihre Eigenschaften wurden an bei 200°C gepreßten und an bei 230°C gespritzten Formkörpern bestimmt.

Die in den Tabellen 1 bis 3 aufgeführten Werte zeigen, daß die Zähigkeit (Reißdehnung und multiaxiale Zähigkeit) der erfindungsgemäßen Formmassen insbesondere von gespritzten Formteilen besser ist als die der Vergleichsmassen, ohne daß Nachteile in der Steifigkeit (Zug-E-Modul, Streckspannung) auftreten.

Tabelle 1

| Beispiel<br>Vergleichsversuch | | 1 | | 2 | | 3 | | 4 | | V1 | | V2 | | V3 | |
|---|---|---|---|---|---|---|---|---|---|---|---|---|---|---|---|
| Komponente | [Gew.-%] | A | 53 | A | 53 | A | 53 | A | 53 | A | 53 | A | 53 | A | 53 |
| Komponente | [Gew.-%] | B1 | 41 | B1 | 41 | B1 | 41 | B1 | 41 | B1 | 41 | B1 | 41 | B1 | 41 |
| Komponente | [Gew.-%] | C1 | 6 | C2 | 6 | C3 | 6 | C4 | 6 | C5 | 6 | C6 | 6 | C7 | 6 |
| Zug-E-Modul, gepreßt | [N/mm$^2$] | 790 | | 710 | | 700 | | 750 | | 720 | | 690 | | 630 | |
| Streckspannung, gepreßt | [N/mm$^2$] | 18 | | 16 | | 16 | | 18 | | 17 | | 16 | | 11 | |
| Reißdehnung, gepreßt | [%] | 57 | | 88 | | 77 | | 70 | | 42 | | 37 | | 8 | |
| Durchstoßarbeit, gepreßt | [Nm] | 27 | | 32 | | 32 | | 28 | | 15 | | 16 | | 5 | |
| Zug-E-Modul, gespritzt | [N/mm$^2$] | 1230 | | 1200 | | 1180 | | 1230 | | 1210 | | 1150 | | 1080 | |
| Streckspannung, gespritzt | [N/mm$^2$] | 24 | | 23 | | 23 | | 25 | | 24 | | 23 | | 22 | |
| Reißdehnung, gespritzt | [%] | 85 | | 90 | | 95 | | 89 | | 42 | | 53 | | 24 | |
| Durchstoßarbeit, gespritzt | [Nm] | 28 | | 31 | | 30 | | 28 | | 13 | | 17 | | 6 | |

Tabelle 2

| Beispiel | 5 | | | |
|---|---|---|---|---|
| Vergleichsversuch | | | V4 | |
| Komponente [Gew.-%] | A | 63 | A | 63 |
| Komponente [Gew.-%] | B1 | 25 | B1 | 25 |
| Komponente [Gew.-%] | C4 | 12 | C6 | 12 |
| Zug-E-Modul, gepreßt [N/mm$^2$] | | 1140 | | 1060 |
| Streckspannung, gepreßt [N/mm$^2$] | | 24 | | 21 |
| Reißdehnung, gepreßt [%] | | 103 | | 72 |
| Durchstoßarbeit, gepreßt [Nm] | | 43 | | 28 |

Tabelle 3

| Beispiel Vergleichsversuch | | 6 | 7 | 8 | 9 | V5 | V6 |
|---|---|---|---|---|---|---|---|
| Komponente | [Gew.-%] | A 53 | A 53 | A 53 | A 53 | A 53 | A 53 |
| Komponente | [Gew.-%] | B2 41 | B2 41 | B2 41 | B2 41 | B2 41 | B2 41 |
| Komponente | [Gew.-%] | C1 6 | C2 6 | C3 6 | C4 6 | C5 6 | C6 6 |
| Zug-E-Modul, gepreßt | [N/mm²] | 1340 | 1170 | 1170 | 1300 | 1210 | 1000 |
| Streckspannung, gepreßt | [N/mm²] | 23 | 20 | 20 | 22 | 20 | 19 |
| Reißdehnung, gepreßt | [%] | 27 | 39 | 34 | 25 | 22 | 22 |
| Durchstoßarbeit, gepreßt | [Nm] | 15 | 19 | 17 | 14 | 14 | 13 |
| Zug-E-Modul, gespritzt | [N/mm²] | 1580 | 1490 | 1440 | 1600 | 1520 | 1410 |
| Streckspannung, gespritzt | [N/mm²] | 31 | 30 | 29 | 31 | 29 | 29 |
| Reißdehnung, gespritzt | [%] | 55 | 68 | 68 | 63 | 39 | 32 |
| Durchstoßarbeit, gespritzt | [Nm] | 9 | 13 | 9 | 11 | 5 | 5 |

**Patentansprüche**

1. Thermoplastische Formmasse, enthaltend, jeweils bezogen auf die Summe der Bestandteile A, B und C,

A:    mindestens 10 Gew.-% eines Styrolpolymerisats A,

B:    mindestens 10 Gew.-% eines Polyolefins B und

C:    1 bis 20 Gew.-% eines durch anionische Polymerisation aus Styrol und Butadien und/oder Isopren hergestellten, unsymmetrischen linearen Dreiblockcopolymerisats C der Struktur $S_1$-D-$S_2$, wobei $S_1$ und $S_2$ je einen Polystyrolblock und D einen Polydienblock bezeichnet,

dadurch gekennzeichnet, daß das Dreiblockcopolymerisat C einen Styrolgehalt, bezogen auf C, zwischen 50 und 85 Gew.-% aufweist und sich die aus Styrol aufgebauten Endblöcke $S_1$ und $S_2$ im Molekulargewicht um mindestens 50 % unterscheiden.

2.  Formmasse nach Anspruch 1, dadurch gekennzeichnet, daß der Block $S_2$ ein mindestens doppelt so großes Molekulargewicht aufweist wie der Block $S_1$.

3.  Formmasse nach Anspruch 1, enthaltend als Polyolefin B Polyethylen.

4.  Formmasse nach Anspruch 3, enthaltend als Polyolefin B füllstoffhaltiges Polyethylen.

5.  Formmasse nach Anspruch 3, enthaltend als Polyolefin B Polyethylen hoher Dichte (HDPE).

6.  Formmasse nach Anspruch 3, enthaltend als Polyolefin B Polyethylen niedriger Dichte (LDPE).

7.  Formmasse nach Anspruch 3, enthaltend als Polyolefin B lineares Polyethylen niedriger Dichte (LLDPE).

8.  Formmasse nach Anspruch 1, enthaltend als Polyolefin B Polypropylen.

9.  Formmasse nach Anspruch 1, enthaltend als Styrolpolymerisat A schlagfestes Polystyrol.

10. Formmasse nach Anspruch 1, enthaltend jeweils 30 bis 80 Gew.-% A und B.

11. Formmasse nach Anspruch 1, enthaltend 50 bis 80 Gew.% A und 20 bis 50 Gew.-% B.

12. Formmasse nach Anspruch 1, enthaltend - bezogen auf 100 Teile A + B + C - 0,05 bis 50 Gewichtsteile übliche Zusatzstoffe.

13. Verwendung der Formmasse nach Anspruch 1 zur Herstellung von Formteilen.

**Claims**

1.  A thermoplastic molding material containing, in each case based on the sum of the constituents A, B and C,

    A:    at least 10 % by weight of a styrene polymer A,

    B:    at least 10 % by weight of a polyolefin B, and

    C:    1 to 20 % by weight of an unsymmetrical linear three-block copolymer C of the structure $S_1$-D-$S_2$, prepared by anionic polymerization from styrene and butadiene and/or isoprene, $S_1$ and $S_2$ each denoting a polystyrene block and D denoting a polydiene block,

    wherein the three-block copolymer C has a styrene content, based on C, of from 50 to 85 % by weight and the terminal blocks $S_1$ and $S_2$ built up from styrene differ in their molecular weight by at least 50 %.

2.  A molding material as claimed in claim 1, wherein the block $S_2$ has a molecular weight that it is at least twice as large as that of block $S_1$.

3.  A molding material as claimed in claim 1, wherein polyolefin B is polyethylene.

4.  A molding material as claimed in claim 3, wherein polyolefin B is filler-containing polyethylene.

5.  A molding material as claimed in claim 3, wherein polyolefin B is high density polyethylene (HDPE).

EP 0 545 181 B1

**6.** A molding material as claimed in claim 3, wherein polyolefin B is low density polyethylene (LDPE).

**7.** A molding material as claimed in claim 3, wherein polyolefin B is linear low density polyethylene (LLDPE).

**8.** A molding material as claimed in claim 1, wherein polyolefin B is polypropylene.

**9.** A molding material as claimed in claim 1, wherein the styrene polymer A is impact-resistant polystyrene.

**10.** A molding material as claimed in claim 1, containing in each case 30 to 80 % by weight of A and B.

**11.** A molding material as claimed in claim 1, containing 50 to 80 % by weight of A and 20 to 50 % by weight of B.

**12.** A molding material as claimed in claim 1, containing, based on 100 parts of A + B + C, 0.05 to 50 parts by weight of conventional additives.

**13.** The use of a molding material as claimed in claim 1 for producing molded parts.

**Revendications**

**1.** Matière de moulage thermoplastique, contenant, respectivement par rapport à la somme des constituants A, B et C,

A : au moins 10 % en poids d'un polymère du styrène A,
B : au moins 10 % en poids d'une polyoléfine B et
C : 1 à 20 % en poids d'un copolymère triséquencé C linéaire, non-symétrique, préparé par polymérisation anionique à partir de styrène et de butadiène et/ou d'isoprène, de la structure $S_1$-D-$S_2$, où $S_1$ et $S_2$ désignent respectivement un bloc de polystyrène et D un bloc polydiénique,

caractérisée en ce que le copolymère triséquencé C présente une teneur en styrène, par rapport à C, entre 50 et 85 % en poids et que les blocs terminaux $S_1$ et $S_2$ formés à base de styrène diffèrent du point de vue de la masse moléculaire d'au moins 50 %.

**2.** Matière de moulage selon la revendication 1, caractérisée en ce que le bloc $S_2$ présente une masse moléculaire d'au moins le double de celle du bloc $S_1$.

**3.** Matière de moulage selon la revendication 1, contenant en tant que polyoléfine B du polyéthylène.

**4.** Matière de moulage selon la revendication 3, contenant en tant que polyoléfine B du polyéthylène contenant de la matière de charge.

**5.** Matière de moulage selon la revendication 3, contenant en tant que polyoléfine B du polyéthylène de haute densité (HDPE).

**6.** Matière de moulage selon la revendication 3, contenant en tant que polyoléfine B du polyéthylène de basse densité (LDPE).

**7.** Matière de moulage selon la revendication 3, contenant en tant que polyoléfine B du polyéthylène linéaire de basse densité (LLDPE).

**8.** Matière de moulage selon la revendication 1, contenant en tant que polyoléfine B du polypropylène.

**9.** Matière de moulage selon la revendication 1, contenant en tant que polymère du styrène A du polystyrène résistant aux chocs.

**10.** Matière de moulage selon la revendication 1, contenant respectivement 30 à 80 % en poids de A et de B.

10

**11.** Matière de moulage selon la revendication 1, contenant 50 à 80 % en poids de A et 20 à 50 % en poids de B.

**12.** Matière de moulage selon la revendication 1, contenant - par rapport à 100 parts de A + B + C - 0,05 à 50 parts en poids d'additifs courants.

**13.** Utilisation de la matière de moulage selon la revendication 1 pour la production de pièces moulées.